# EUROPÄISCHE PATENTSCHRIFT

(11) **EP 0 293 599 B1**
(45) Veröffentlichungstag und Bekanntmachung des Hinweises auf die Patenterteilung: **03.03.1993**
(21) Anmeldenummer: 88106805.0
(22) Anmeldetag: 28.04.1988
(51) Int. Cl.: B29D 30/56

(54) **Verfahren zur Laufstreifen- und Teilgürtelerneuerung von Fahrzeugluftreifen**
Method of recapping tyres
Procédé de rechappage de pneumatiques

(30) Priorität: 04.06.1987 DE 3718703
(43) Veröffentlichungstag der Anmeldung: 07.12.1988
(73) Patentinhaber: Continental Aktiengesellschaft, 30165 Hannover (DE)
(72) Erfinder: Entmayr, Peter, Dr., D-3006 Burgwedel 5 (DE); Reppin, Manfred, D-3000 Hannover 91 (DE); Küster, Werner, D-3203 Sarstedt (DE)

(56) Entgegenhaltungen:
- EP-A- 0 047 711
- EP-A- 0 189 826
- FR-A- 2 345 290

## Beschreibung

Die Erfindung betrifft ein Verfahren zur Laufstreifen-und Teilgürtelerneuerung von Fahrzeugluftreifen, wobei gegebenenfalls unter Zwischenlegen von Bindemittelschichten zunächst die Gürtellage(n) und dann der fertig vulkanisierte, profilierte Laufstreifen auf den Reifenkörper aufgelegt wird und dann eine Druckbehandlung gegebenenfalls bei erhöhter Temperatur erfolgt.

Für den Fall, daß eine Teilgürtelerneuerung nicht erforderlich ist, hat das oft als Kaltbesohlungsverfahren bekannte Verfahren den großen Vorteil, daß zum Zwecke der Endbehandlung in einem Autoklaven der fertig belegte Reifenkörper mit einer ihn umgebenden Gummimanschette versehen werden kann. Durch den Reifeninnendruck und den im Autoklaven herrschenden Druck ergibt sich dann bei erhöhter Temperatur eine sichere Bindung des vorher vulkanisierten, fertig profilierten Laufstreifens.

Für den Fall jedoch, daß auch eine oder mehrere Gürtellagen erneuert werden müssen, kann dieses einfache Verfahren nicht mehr ausgeübt werden. Der fertig belegte Reifen muß unter diesen Voraussetzungen vielmehr mit einer Stahlbandage umschlossen werden, um z.B. unerwünschte Verwerfungen der Gürtelfestigkeitsträger z.B. Winkelveränderungen auszuschalten.

Aus der EP-A-0 189 826 ist ein solches Runderneuerungsverfahren mit Teilgürtelerneuerung bekannt, das eine Stahlmanschette erfordert, die von außen am Reifenumfang angreifend das Durchmesserwachstum der neu aufgelegten Reifenteile begrenzt. Diese als Korsett wirkende Stahlmanschette ist erforderlich bis die Festigkeit des Reifens wiederhergestellt ist. Die Stahlbandage ist als Fixierung für die noch nicht durchmesserbegrenzend wirkenden, neu aufgelegten Gürtellagen erforderlich.

Aus der französischen Patentanmeldung 77 07664 ist ein Runderneuerungsverfahren mit Teilgürtelerneuerung bekannt, wo der Laufstreifen wahlweise vor oder nach dem Auflegen vulkanisiert wird und die neuen Gürtellagen in unvulkanisierten Zustand aufgelegt werden. Auch hier ist ein Korsett bei der Erstellung der Verbindungen der Lagen untereinander erforderlich. Im Gegensatz zum vorangenannten Stand der Technik greift dieses Korsett nicht als Vorrichtung am äußeren Reifenumfang sondern als Reifenbauteil inmitten des Reifens selbst an. Als Korsett ist hier eine Spirale aus zugsteifen Festigkeitsträgern auf der letzten unerneuerten Karkaß- bzw. Gürtellage vorgesehen.

Aus der europäischen Patentanmeldung 0 047 711 ist schließlich ein weiteres Runderneuerungsverfahren zur Teilgürtelerneuerung bekannt, wo ebenfalls durch ein Korsett das Durchmesserwachstum des rundzuerneuernden Reifens bei der zur Herstellung der Lagenverbindungen erforderlichen Druckbehandlung begrenzt wird. Auch hier ist ein solches Korsett erforderlich, um Verwerfungen und Lageveränderungen der Festigkeitsträgerlagen auszuschließen. Im Gegensatz zu den vorangenannten Entgegenhaltungen ist hier das Korsett noch weiter radial innen angeordnet, nämlich innerhalb des Blähbalges. Durch Anordnung einer Lage mit in Umfangsrichtung verlaufenden Festigkeitsträgern im Zenit des Blähbalges ist nach Straffung dieser Festigkeitsträger zumindest im Zenit praktisch kein weiteres Wachstum der Vorrichtung und damit des rundzuerneuernden Reifens mehr möglich.

Der Erfindung liegt die Aufgabe zugrunde, ein Runderneuerungsverfahren mit Teilgürtelerneuerung anzugeben, daß bei einer vergleichsweise kurzen Vulkanisier- bzw. Behandlungzeit im Autoklaven auf wachstumsbegrenzende Vorrichtungen, wie z. B. die erwähnten Stahlmanschetten, und zusätzliche Reifenbauteile verzichtet werden kann.

Zur Lösung dieser Aufgabe werden aufgrund der Erfindung die aufzulegenden Gürtellagen vor dem Auflegen so vulkanisiert, daß allein hierdurch Verformungen und Lageveränderungen der Festigkeitsträgerlagen ausgeschlossen sind. Es muß also zumindest ein Vorvulkanisieren vollzogen werden mit dem Ziel, eine ausreichende Formsteifigkeit des Hüllgummis für die Festigkeitsträger des Gürtels herbeizuführen.

Unter diesen Voraussetzungen kann das Fertigbehandeln des Reifens unter Verzicht auf eine zusätzliche Stahlbandage geschehen; es ist ausreichend, eine einfache Gummimanschette zu benutzen.

Eine unerwünschte Verwerfung der Festigkeitsträger der neu aufgelegten Gürtellagen ist deshalb ausgeschlossen, weil die Festigkeitsträger durch den schon in ausreichender Weise ausgehärteten Hüllstoff an unerwünschten Lageveränderungen gehindert sind.

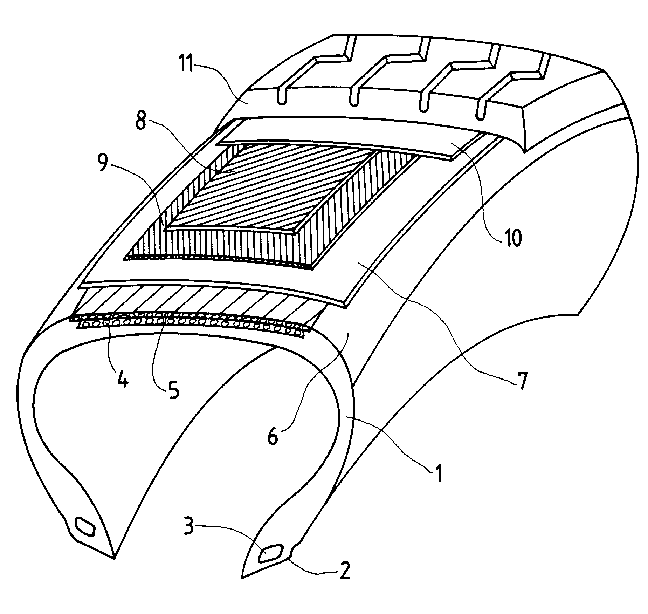

Weitere Einzelheiten der Erfindung werden anhand der Zeichnung erläutert, die zur Beschreibung des erfindungsgemäßen Verfahrens dienen soll.
- Die Abb.: zeigt in schaubildlicher Teildarstellung die auf den kalt zu besohlenden Reifenkörper aufzubringenden Schichten.

In üblicher Weise besteht der Reifenkörper aus Gummi oder gummiähnlichen Stoffen. Er ist durch mehrere Verstärkungseinlagen verfestigt.

Der eigentliche Reifenkörper 1 wird durch eine nicht näher dargestellte Karkasse verfestigt, die in der Wulstpartie 2 durch Umschlingen der Reifenkerne 3 verankert ist.

Der für die Besohlung vorgesehene Reifenkörper 1 hat oberhalb seiner Karkasse nur noch zwei übereinanderliegende Gürtellagen 4, 5. Die Außenfläche dieses Teilgürtels und die zu beiden Seiten davon befindlichen Schulterflächen 6 des Reifenkörpers 1 werden, nachdem die abgefahrenen oder beschädigten, darüber befindlichen Reifenteile entfernt worden sind, aufgerauht oder in sonstiger Weise für das weitere Verfahren vorbereitet. Alsdann wird auf den Zenit dieses Reifenkörpers eine stahlhaftende Polsterplatte 7 aufgelegt, die durch Beimischung von Beschleunigern und dergl. so vorbereitet ist, daß sie vergleichsweise schnell vulkanisierbar ist. Die Polsterplatte 7 dient als Unterlage für die neu aufzubringenden Gürtellagen 8, 9 die je aus in einer Lage angeordneten, in Cordlage befindlichen dünnen Drahtseilen bestehen, welche in Gummi eingebettet sind, so daß somit zwei gummierte Stahlseillagen entstehen mit gegenläufigem Anstieg ihrer Stahlseile.

Wichtig ist nun, daß die beiden Gürtellagen 8, 9 vor dem Auflegen auf die Polsterplatte 7 vulkanisiert worden sind, der die einzelnen Festigkeitsträger umschließende Hüllgummi somit nicht mehr plastisch, sondern derart elastisch ist, daß Winkelveränderungen der einzelnen Festigkeitsträger nicht mehr ohne weiteres möglich sind.

Die beiden Gürtellagen 8, 9 werden dann mit einer dünnen Bindeplatte 10 aus unvulkanisiertem Gummi belegt. Auch diese Gummiplatte ist so beschaffen, daß sie vergleichsweise schnell ausvulkanisiert. Diese auch die einzelnen Unebenheiten ausgleichende Bindeplatte 10 wird nun mit dem fertig vulkanisierten, profilierten Laufstreifen 11 versehen.

Es sei erwähnt, daß außer den plattenförmigen Binde- und Polstermitteln 7, 10 Auf- und Einstriche erfolgen können, um die Bindung zwischen den einzelnen Elementen zu beschleunigen und zu verbessern.

Der so aufgebaute Reifen wird nunmehr mit einer Gummibandage versehen, zusätzlich jedoch noch auf eine Felge aufgesetzt und vor dem Einbringen in einen Autoklaven aufgepumpt.

Durch die Behandlung im Autokalven wird die vorteilhafte Druckbehandlung vollzogen, gleichzeitig jedoch die zum Ausvulkanisieren erforderliche Temperatur zwischen 100 und 150°C erzeugt. Es ist nicht erforderlich, den gemäß Abbildung aufgebauten Reifenkörper mit einer besonders ihn umschließenden Stahlbandage zu versehen; die Festigkeitsträger der Gürtellagen 8 und 9 verändern ihre gewünschte Winkellage nicht, weil der sie umhüllende Gummi vor dem Auflegen der beiden Gürtellagen 8, 9 vulkanisiert worden war.

Das erfindungsgemäße Verfahren hat noch den großen Vorteil, daß die Behandlung im Autoklaven vergleichsweise schneller ausgeführt werden kann, weil der Gummi für die beiden Gürtellagen 8, 9 nicht mehr zu vulkaniseren war.

## Patentansprüche

1. Verfahren zur Laufstreifen- und Teilgürtelerneuerung von Fahrzeugluftreifen (1), wobei die neue(n) Gürtellage(n) (8, 9) vor dem Auflegen vulkanisiert wird (werden), diese (8, 9) danach gegebenenfalls unter Zwischenlegen von Bindemittelschichten (7, 10) und Anwendung von Aufstrichen und dann der fertig vulkanisierte, profilierte Laufstreifen (11) auf den Reifenkörper (1) aufgebracht wird (werden) und dann eine Druckbehandlung gegebenenfalls bei erhöhter Temperatur erfolgt, wobei Verformungen und Lageänderungen der Festigkeitsträger in der (den) Gürtellage(n) (8, 9) allein durch die anfängliche Vulkanisation der neuen Gürtellage(n) (8, 9) ausgeschlossen sind.

2. Verfahren nach Anspruch 1, dadurch gekennzeichnet, daß die Gürtellage(n) (8, 9) zumindest vorvulkanisiert wird (werden).

3. Verfahren nach Anspruch 1, dadurch gekennzeichnet, daß der Reifenkörper (1) vor dem Auflegen der Gürtellage(n) (8, 9) mit einer schnell vulkanisierenden, dünnwandigen Bindeplatte (7, 10) aus Gummi belegt wird.

## Claims

1. Method of renewing tread strips and parts of belts of pneumatic vehicle tyres (1), the new belt ply (plies) (8, 9) being vulcanised prior to being placed in position, said ply (plies) (8, 9) being subsequently applied to the tyre body (1), optionally with the interposition of layers (7, 10) of bonding material and with the use of coatings, and then the ready vulcanised, profiled tread strip (11) is applied to said tyre body, and then a pressure treatment is optionally effected at a high temperature, whereby deformations and positional changes of the reinforcing members in the belt ply (plies) (8, 9) are excluded solely by the initial vulcanisation of the new belt ply (plies) (8, 9).

2. Method according to claim 1, characterised in that the belt ply (plies) (8, 9) is (are) at least prevulcanised.

3. Method according to claim 1, characterised in that the tyre body (1) is covered with a rapidly vulcanising, thin-walled bonding plate (7, 10) of rubber prior to the belt ply (plies) (8, 9) being placed in position.

## Revendications

1. Procédé pour une rénovation de bandes de roulement et de parties de ceintures de pneumatiques (1) de véhicules, où la (les) nouvelle(s) couche(s) de ceinture (8, 9) est (sont) vulcanisée(s) avant la mise en place, cette (ces) couche(s) (8, 9) est (sont) ensuite, le cas échéant avec interposition de couches de liant (7, 10) et utilisation d'enduits, mise(s) en place sur le corps de pneumatique (1), puis la bande de roulement (11), profilée et terminée de vulcanisation, est mise en place sur le corps de pneumatique (1), et ensuite un traitement sous pression est effectué le cas échéant à une température élevée, de sorte que des déformations et des changements de positions des éléments résistants dont la(les) couche(s) de ceinture (8, 9) est (sont) empêchée(s) uniquement par la vulcanisation préalable de la (des) nouvelle(s) couche(s) de ceinture (8, 9).

2. Procédé selon la revendication 1, caractérisé en ce que la(les) couche(s) de ceinture (8, 9) est (sont) au moins prévulcanisée(s).

3. Procédé selon la revendication 1, caractérisé en ce que le corps de pneumatique (1) est revêtu, avant la mise en place de la (des) couche(s) de ceinture (8, 9) d'une feuille de liaison (7, 10) à paroi mince en caoutchouc, vulcanisant rapidement.
